(19) Europäisches Patentamt
European Patent Office
Office européen des brevets

(11) **EP 3 425 712 A1**

(12) **EUROPEAN PATENT APPLICATION**
published in accordance with Art. 153(4) EPC

(43) Date of publication:
**09.01.2019 Bulletin 2019/02**

(51) Int Cl.:
*H01M 4/92* (2006.01)          *B01J 23/44* (2006.01)
*H01M 8/10* (2016.01)

(21) Application number: **17759482.7**

(22) Date of filing: **24.01.2017**

(86) International application number:
**PCT/JP2017/002387**

(87) International publication number:
**WO 2017/150010 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 JP 2016037629**

(71) Applicant: **N.E. Chemcat Corporation**
**Tokyo 105-6124 (JP)**

(72) Inventors:
• **MIZUSAKI Tomoteru**
  **Bando-shi**
  **Ibaraki 306-0608 (JP)**
• **NAKAMURA Yoko**
  **Bando-shi**
  **Ibaraki 306-0608 (JP)**
• **NAGAMORI Kiyotaka**
  **Bando-shi**
  **Ibaraki 306-0608 (JP)**
• **IGARASHI Hiroshi**
  **Bando-shi**
  **Ibaraki 306-0608 (JP)**
• **SEKI Yasuhiro**
  **Bando-shi**
  **Ibaraki 306-0608 (JP)**

(74) Representative: **Gill, Stephen Charles**
**Mewburn Ellis LLP**
**City Tower**
**40 Basinghall Street**
**London EC2V 5DE (GB)**

(54) **CATALYST FOR ELECTRODE, COMPOSITION FOR FORMING GAS DIFFUSION ELECTRODE, GAS DIFFUSION ELECTRODE, MEMBRANE ELECTRODE ASSEMBLY, AND FUEL CELL STACK**

(57) To provide electrode catalyst which has the catalyst activity equal to or more than the Pt / Pd / C catalyst. The electrode catalyst 10A has a support 2 and catalyst particles 3a supported on the support. The catalyst particle has the core part 4 formed on the support, the first shell part 5a formed on the core part and the second shell part 6a formed on a part of the surface of the first shell part. The core part contains Pd, the first shell part contains Pt, and the second shell part contains the Ti oxide. A percentage of the Pt $R1_{Pt}$ (atom %) and a percentage of the Ti derived from the Ti oxide $R1_{Ti}$ (atom %) in an analytical region near a surface measured by X-ray photoelectron spectroscopy satisfy the conditions of the equation (1) : $1.00 \leq (R1_{Ti} / R1_{Pt}) \leq 2.50$.

FIG.1

10A Electrode catalyst
6a Second shell part
5a First shell part
5s Exposed surface of first shell part
3a Catalyst particle
4 Core part
6s Second shell part
2 Support

**Description**

TECHNICAL FIELD

The present invention relates to an electrode catalyst. Particularly, the present invention relates to an electrode catalyst suitable usable for a gas diffusion electrode, more suitably usable for a gas diffusion electrode of a fuel cell.
Also, the present invention relates to a composition for forming a gas diffusion electrode including the electrode catalyst particles, a membrane-electrode assembly, and a fuel cell stack.

BACKGROUND ART

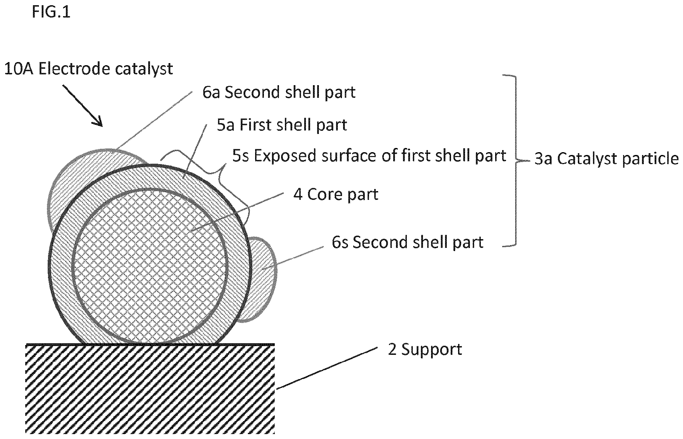

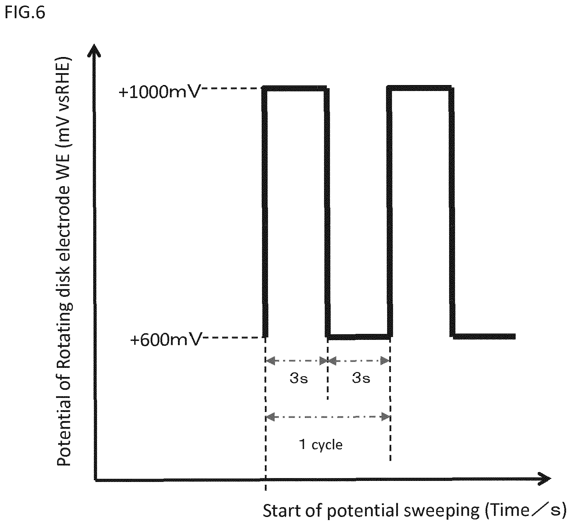

A solid polymer electrolyte fuel cell (Polymer Electrolyte Fuel Cell: hereinafter called "PEFC" as needed) has been developed as electric power source of a fuel cell vehicle, a home cogeneration system, and the like.
As a catalyst used for the gas diffusion electrode of PEFC, a noble metal catalyst composed of a noble metal of platinum group elements such as platinum (Pt).
For example , as a typical conventional catalyst, there has been known "Pt on carbon catalyst" (hereinafter called "Pt/C catalyst" as needed) (for example, Pt/C catalyst having a Pt support rate of 50 wt%, Trade Name: "NE-F50" available from N.E.CHEMCAT).
In the production costs of PEFC, a proportion of the noble metal catalyst such as Pt is large, and it is the problem to lower the PEFC cost and to spread PEFC.
To solve the problem, developments of technique for lowering the noble metal in the catalyst, or technique for de-noble metalizing have been progressed.
Among these developments, in order to reduce the amount of platinum to be used, a catalyst particle having a core-shell structure formed by a core part made of non-platinum element and a shell part made of Pt (hereinafter called "core-shell catalyst particle" as needed) has been studied, and there are many reports.
For example, in Patent Document 1, there is disclosed a particle composite material (core-shell catalyst particle) having a structure where palladium (Pd) or a Pd alloy (corresponding to the core part) is covered with an atomic thin layer of Pt atom (corresponding to shell part). Further in Example of this Patent Document 1, a core-shell catalyst particle where the core part is a Pd particle and the shell part is a layer made of Pt is described.
In addition, there has been studied a structure where a metal element other than the Pt group is contained as the structural element of the core part.
For example, there has been proposed a structure where a Ti oxide is contained as the structural element of the core part (for example, Patent Documents 2 to 5).
In Patent Document 2, there is disclosed a synthesis example of a catalyst having a structure that particles where a core part is $TiO_2$ and a shell part is an alloy of a reduced product of $TiO_2$ ($TiO_2$-y, $0 < y \leq 2$) and Pt are supported on a carbon support (Patent Document 2, Example 10).
In Patent Document 3, there is disclosed a platinum-metal oxide composite particle where a core part is made of a Ti oxide and a shell part is made of Pt, etc. (Patent Document 3, Paragraph 0010).
In Patent Document 4, there is disclosed catalyst particles having a structure where an inside core (core part) which contains Pd (Pd of zero valent metal state), an alloy of Pd and a noble metal selected from other group of noble metals, a mixture thereof, and a ceramic material such as titania ($TiO_2$), and an outer shell (shell part) of Pt, an alloy of Pt, or the like (for example, Patent Document 4, Paragraphs 0026 and 0027).
In Patent Document 5, there is proposed a catalyst for a fuel cell having a structure where an inside particle (core part) of a Ti oxide and a Pt-containing outermost layer (shell part) which covers at least a part of the surface of the inside particle (for example, Patent Document 5, Fig.1, Paragraphs 0031 to 0039). Further in Reference Example 3 of Patent Document 5, there is described that the presence of platinum on the crystalline $TiO_2$ could be acknowledged by measuring according to High-Angle Annular Dark-Field (hereinafter, sometimes referred to as "HAADF"), and measuring according to Energy Dispersive X-ray Spectroscopy (hereinafter sometimes referred to as "EDS") (for example, Patent Document 5, Paragraph 0116, Fig.4, Fig.5).
In addition to the above literatures, there are proposed catalysts having structures where a Ti oxide is contained as a structural material (for example, Patent Literatures 6 to 7).
In Patent Literature 6, there is disclosed a catalyst where s complex which contains Pt and a Ti oxide is supported on an electroconductive support. More specifically, this catalyst is the state where the surface of the catalyst is covered with platinum by washing with fluoric acid in the production process to remove the titanium oxide on the surface of the catalyst. This state is acknowledged by TEM-EELS (Transmission Electron Microscope - Electron Energy-Loss Spectroscopy) analysis (for example, Patent Literature 6, Paragraph 0040, FIG. 6, FIG. 7).
In Patent Literature 7, there is proposed a platinum-titanium oxide-titanium carbide composite catalyst for fuel batteries. The catalyst is provided with platinum fine particles, and a titanium oxide layer which contains a titanium oxide and platinum fine particles and surrounds the platinum fine particles. Further, the catalyst has at least one electrically conducting channel through the platinum fine particles between the surface of the titanium carbide and a surface of the catalyst with the aid of electrical contact between a platinum atom in the platinum fine particle and the titanium carbide surface. Furthermore, in the electrically conducting channel, a platinum atom in the platinum fine particle and the titanium oxide are bonded to each other, and the titanium carbide has a rosary-like structure (for example, Patent Literature 7, Paragraph 0007, FIG. 1).

Incidentally, the present applicant submits, as publications where the above-mentioned publicly-known inventions are described, the following publications:

PRIOR ART DOCUMENT

Patent Document

Patent Document 1: US Un-examined Patent Application Publication No. 2007/31722
Patent Document 2 : Japanese Un-examined Patent Application Publication No. 2012-143753
Patent Document 3: Japanese Un-examined Patent Application Publication No. 2008-545604
Patent Document 4: Japanese Un-examined Patent Application Publication No. 2010-501345
Patent Document 5: Japanese Un-examined Patent Application Publication No. 2012-081391
Patent Document 6: Japanese Un-examined Patent Application Publication No. 2015-204271
Patent Document 7: Japanese Un-examined Patent Application Publication No. 2013-127869

SUMMARY OF THE INVENTION

Problem to be solved by the invention

However, with respect to an electrode catalyst for a fuel cell which contains a support and catalyst particles having a core-shell structure supported on the support, when researching the aforementioned prior arts from the viewpoint of electrode catalysts having a first shell part which contains Pt (Pt of zero valent metal state) as a main component adn is formed on at least of the surface of a core which contains Pd (Pd of zero valent metal state) as a main component, and a second shell part which contains a Ti oxide as a main component and is formed on a part of the first shell part, the present inventors have found that there are improvement because study and working examples were not enough with respect to the structure to obtain catalyst having activity higher than or equal to the Pt / Pd / C catalyst in addition to the reduction of the Pt amount to be used.

The present invention has been completed under the technical background, and is to provide an electrode catalyst which has catalyst activity higher than or equal to the Pt / Pd / C catalyst and contributes to lowering of the cost.

Further, the present invention is to provide a composition for forming a gas diffusion electrode including the electrode catalyst particles, a gas diffusion electrode, a membrane-electrode assembly (MEA), and a fuel cell stack.

Means to solve the problems

In a case of employing the structure that has a first shell part which contains Pt as a main component and is formed on at least of the surface of a core which contains Pd (Pd of zero valent metal state) as a main component, and a second shell part which contains a Ti oxide as a main component and is formed on a part of the first shell part, in order to reduce the Pt amount to be used, the present inventors have intensively studied a possible structure which can give catalyst activity higher than or equal to the Pt / Pd / C catalyst.

As a result, the present inventors have found that, in a structure which forms the second shell part which covers partly over the surface of the above first shell part and contains a Ti oxide (particularly $TiO_2$) as a main component, the surface structure satisfies the certain conditions (condition of Equation (1), etc) is effective, and the present invention has been completed.

More specifically, the present invention comprises the following technical elements.

Namely, according to the present invention, there can be provided (N1) An electrode catalyst comprises:

an electrically conductive support, and
catalyst particles supported on the support,

wherein

the catalyst particle comprises a core part formed on the support, a first shell part formed on at least a part of the surface of the core part, and a second shell part formed on a part of the surface of the first shell part,

the core part contains Pd,

the first shell contains Pt as a main component,

the second shell contains a Ti oxide as a main component, and

a percentage of the Pt $R1_{Pt}$ (atom %) and a percentage of the Ti derived from the Ti oxide $R1_{Ti}$ (atom %) in an analytical region near a surface measured by X-ray photoelectron spectroscopy (XPS) satisfy the conditions of the following equation (1).

$$1.00 \leq (R1_{Ti} / R1_{Pt}) \leq 2.50 \qquad (1)$$

Though the detailed mechanism has not yet been found enough, by employing the aforementioned structure, the electrode catalyst has catalyst activity higher than or equal to the Pt / Pd / C catalyst and contributes to lowering of the cost.

The present inventors have found that the effects of the present invention can be obtained more reliably, when employing the structure where the chemical composition of the analytical region of the catalyst particle of the electrode catalyst near a surface measured by the XPS satisfies the conditions of the equation (1) (structure where the percentage of the Ti oxide is relatively large).

Though the detailed mechanism has not yet been found enough, the present inventors assume that the reduction reaction of oxygen on the Pt of the first shell part of the catalyst particle can be promoted when the Ti oxide which satisfies the equation (1) exists on or near the surface of the catalyst particle. For instance, it is assumed that when the Ti oxide exists near the Pt of the first shell part, the water produced by the reduction reaction of oxygen on the Pt moves smoothly from the Pt to the Ti oxide side, which promotes the reduction reaction of oxygen.

When the $(R1_{Ti} / R1_{Pt})$ is less than 1.00, the degree of the improving effect of the catalyst properties by adding the Ti oxide tends to be small. Further, when the $(R1_{Ti} / R1_{Pt})$ is more than 2.50, since a percentage of the part of the Pt having high catalyst properties decreases on the surface of the electrode catalyst, the degree of the improving effect of the catalyst properties by adding the Ti oxide tends to be small.

According to the equation (1), when calculating the percentage $R1_{Pt}$ (atom %) of Pt, the percentage $R1_{Pd}$ (atom %) of Pd, and the percentage $R1_{Ti}$ (atom %) of the Ti oxide by XPS, the numerical value is calculated so that the sum of the three components is 100 %. Namely, in the analytical region near a surface of the electrode catalyst, a percentage of carbon (atom %) detected other than the Pt, the Pd and the Ti oxide is omitted from the calculation.

In the present invention, XPS is measured under the following (A1) to (A6) conditions.

(A1) X-ray source: Monochromatic AlKα

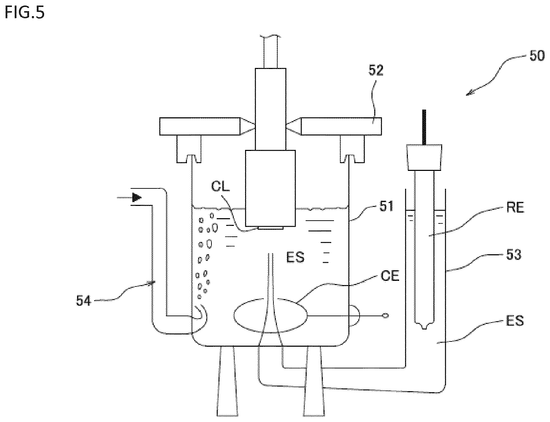

(A2) Photoelectron taking out angle: θ=75 °C (referring the following FIG.5)

(A3) Charge correction: Correcting on the basis that C1s peak energy is 284.8 eV (A4) Analytical region: 200 μm

(A5) Chamber pressure at analyzing: about 1 x 10⁻⁶ Pa

Here, in the present invention, the "state where Pt is contained in the first shell part as a main component" means the state where an amount (mass %) of the Pt component (Pt of zero valent metal state) contained in the structural components of the first shell part is largest. Further, in the "state where Pt is contained in the first shell part as a main component", the percentage of the Pt component contained in the structural components of the first shell part is preferably 50 % by mass or more, more preferably 80 % by mass or more, further preferably 90 % by mass or more.

Further, in the present invention, the "state where the Ti oxide is contained in the second shell part as a main component" means the state where an amount (mass %) of the Ti oxide component contained in the structural components of the second shell part is largest. Further, in the "state where Ti is contained in the second shell part as a main component", the percentage of the Ti component contained in the structural components of the second shell part is preferably 50 % by mass or more, more preferably 80 % by mass or more, further preferably 90 % by mass or more.

Furthermore, from the viewpoint that the effects of the present invention can be obtained more reliably, the "Ti oxide" is preferably $TiO_2$ which is chemically more stable.

In the instant description, when explaining the structure of the electrode catalyst, if necessary, the wording "structure (main structural material) of the catalyst particle supported on a support / structure (main structural material) of a support having electric conductivity" is employed.

More specifically, the wording "structure of shell part / structure of core part / structure of support" is employed. Furthermore specifically, when the catalyst particle has a structure where two shall parts, the wording "structure of outer shell part / structure of inner shell part / structure of core part / structure of support" is employed.

For instance, when the electrode catalyst has a structure of "shell part of the Ti oxide, shell part of Pt, core part of Pd as a main component, support of electrically conductive carbon", the wording "TiO$_x$ / Pt / Pd / C" is employed. Here, "x" of the "TiO$_x$" represents a stoichiometric coefficient of O atom to the Ti atom.

Here, in the present invention, the "state where Pd is contained in the core part as a main component" means the state where an amount (mass %) of the Pd component (Pd of zero valent metal state) contained in the structural components of the core part is largest. Further, in the "state where Pd is contained in the core part as a main component", the percentage of the Pd component contained in the structural components of the core part is preferably 50 % by mass or more, more preferably 80 % by mass or more, further preferably 90 % by mass or more.

Further, it is preferable that the electrode catalyst described in the (N1) according to the present invention has (N2) a percentage $R1_{Pt}$ (atom %) of the Pt, a percentage $R1_{Pd}$ (atom %) of the Pd and a percentage $R1_{Ti}$ (atom %) of the Ti derived from the Ti oxide in an analytical region near a surface measured by X-ray photoelectron spectrum analysis (XPS) satisfy the conditions of the following equation (2).

$$0.20 \leq \{R1_{Ti} / (R1_{Pt} + R1_{Pd} + R1_{Ti})\} \leq 0.50 \qquad (2)$$

The present inventors have found that the effects of the present invention can be obtained more reliably, when employing, other than the conditions of the equation (1), the structure where the chemical composition of the analytical region of the catalyst particle of the electrode catalyst near a surface measured by the XPS satisfies the conditions of the equation (2) (structure where the percentage of the Ti oxide is relatively large to the Pt).

Though the detailed mechanism has not yet been found enough, the present inventors assume that the reduction reaction of oxygen on the Pt of the first shell part of the catalyst particle can be promoted when the Ti oxide which satisfies the equation (2) exists on or near the surface of the catalyst particle. For instance, it is assumed that when the Ti oxide exists near the Pt of the first shell part, the water produced by the reduction reaction of oxygen on the Pt moves smoothly from the Pt to the Ti oxide side, which promotes the reduction reaction of oxygen.

When the $\{R1_{Ti} / (R1_{Pt} + R1_{Pd} + R1_{Ti})\}$ is 0.25 or more, the degree of the improving effect of the catalyst properties by adding the Ti oxide tends to be large. Further, when the $\{R1_{Ti} / (R1_{Pt} + R1_{Pd} + R1_{Ti})\}$ is 0.50 or less, since a percentage of the part of the Pt having high catalyst properties decreases on the surface of the electrode catalyst, the degree of the improving effect of the catalyst properties by adding the Ti oxide tends to be large.

Further, it is preferable that in the electrode catalyst described in the (N1) or (N1) according to the present invention,
(N3) a support rate $L_{Pt}$ (wt %) of Pt, a support rate $L_{Pd}$ (wt %) of Pd, and a support rate $L_{Ti}$ (wt %) of the Ti derived from the Ti oxide measured by ICP light emission analysis satisfy the conditions of the following equation (3).

$$0.05 \leq \{L_{Ti} / (L_{Pt} + L_{Pd} + L_{Ti})\} \leq 0.15 \qquad (3)$$

The electrode catalyst which satisfies the condition of the equation (3) in addition to the condition of the equation (1) or the conditions of the equation (1) and the equation (2) can have the structure where the Ti oxide is disposed mainly on the surface of the catalyst particle but is not almost contained in the inside of the catalyst particle, more reliably. Thereby, on the surface of the catalyst, the effects of the addition of the Ti oxide can be obtained more reliably with respect to the oxygen reduction reaction and the hydrogen oxidation reaction, and in the inside of the catalyst particle, since the Ti oxide is small, the excellent electron conductivity of the catalyst particle can be more easily obtained.

Further, it is preferable that in the electrode catalyst of the present invention, an average value of crystallite size of the crystal particle measured by powder X-ray diffraction (XRD) is 3 to 35.0 nm.

It is preferable that the average value of the crystallite size is 3 nm or more, since there tends largely to form the particles to be the core part on the support more easily. Further, it is preferable that the average value of the crystallite size is 35.0 nm or less, since it is easy to form the particles to be the core part on the support under highly dispersing state. Further, from the same point of view, the average value of crystallite size of the crystal particle measured by powder X-ray diffraction (XRD) is preferably 3 to 20 nm, further preferably 3 nm or more and less than 20 nm.

In the present invention, in case that the first shell part is made of Pt, the core part is made of Pd and the first shell part composed of one or two Pt atomic layers, since the peak of Pt(220) plane cannot be observed by XRD, the average value calculated from the peak of Pd(220) plain of the core part is assumed to be an average value of the crystallite size of the catalyst particle.

In addition, the present invention provides
(N4) a composition for forming gas diffusion electrode which contains the electrode catalyst according to any one of the above (N1) to (N3).

Since the composition for forming gas diffusion electrode of the present invention contains the electrode catalyst of the present invention, it is possible to produce easily a gas diffusion electrode which has the catalyst activity (polarization property) and durability higher than or equal to the Pt / Pd / C catalyst, and contributes to the low cost.

In addition, the present invention provides

(N5) a gas diffusion electrode which comprises the electrode catalyst according to any one of the above (N1) to (N3).

The gas diffusion electrode of the present invention is configured by including the electrode catalyst of the present invention. Therefore, it is easy to produce a structure which has the catalyst activity (polarization property) and durability higher than or equal to the Pt / Pd / C catalyst, and contributes to the low cost.

In addition, the present invention provides

(N6) a membrane-electrode assembly (MEA) comprising the gas diffusion electrode according to the above (N5).

Since the membrane-electrode assembly (MEA) of the present invention includes the gas diffusion electrode of the present invention, it is easy to produce a structure which has the catalyst activity higher than or equal to the MEA having the Pt / Pd / C catalyst in the gas diffusion electrode, and contributes to the low cost.

In addition, the present invention provides

(N7) a fuel cell stack comprising the membrane-electrode assembly (MEA) according to the above (N6).

Since the fuel cell stack of the present invention includes the membrane-electrode assembly (MEA) of the present invention, in comparison with the fuel cell stack which includes at least one MEA having the Pt / Pd / C catalyst in the gas diffusion electrode, it is easy to produce a structure which has the catalyst activity higher than or equal to, and contributes to the low cost.

EFFECTS OF THE INVENTION

According to the present invention, the electrode catalyst which has the catalyst activity higher than or equal to the Pt / Pd / C catalyst, and contributes to the low cost can be provided.

In addition, according to the present invention, there can be provided the composition for forming gas diffusion electrode, the gas diffusion electrode, the membrane-electrode assembly (MEA), and the fuel cell stack, which contain the above electrode catalyst can be provided.

BRIEF DESCRIPTION OF THE DRAWINGS

FIG.1 is a schematic sectional view showing the preferred first embodiment of the electrode catalyst of the present invention.

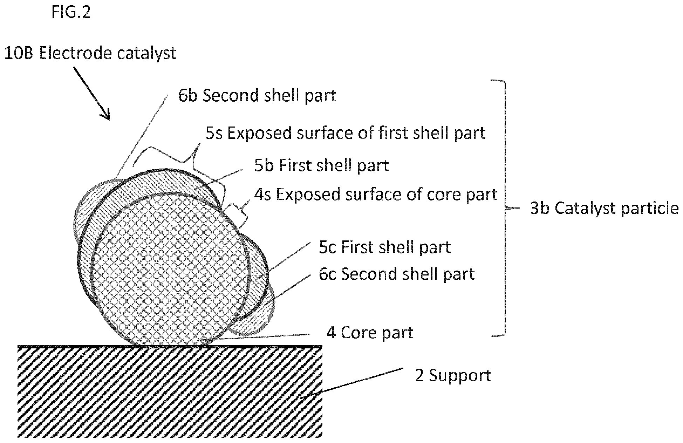

FIG.2 is a schematic sectional view showing the preferred second embodiment of the electrode catalyst of the present invention.

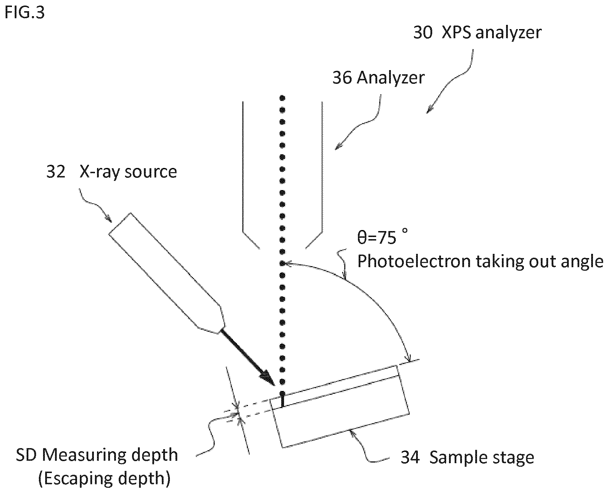

FIG.3 is a schematic diagram showing a brief structure of the XPS machine to explain the analytical conditions of the X-ray photoelectron spectrum analysis (XPS) in the present invention.

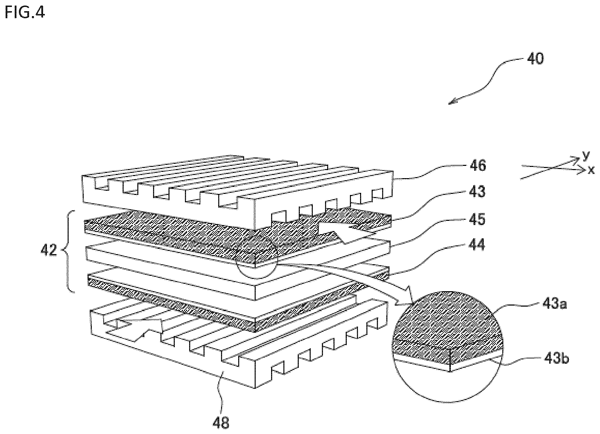

FIG.4 is a schematic diagram showing a preferred embodiment of a fuel cell stack of the present invention.

FIG.5 is a schematic diagram showing a brief structure of the rotating disk electrode measuring machine provided with the rotating disk electrode used in the working examples.

FIG.6 is a graph showing the "potential sweep mode of rectangular wave" where the potential (vsRHE) of the rotating disk electrode WE with respect to the reference electrode RE in the working examples.

MODE FOR CARRYING OUT THE INVENTION

Preferable embodiments of the present invention are described in detail hereunder with reference to the drawings when necessary.

<Electrode catalyst>

FIG.1 is a schematic cross-sectional view showing the preferred first embodiment of an electrode catalyst (core-shell catalyst) of the present invention. And FIG.2 is a schematic cross-sectional view showing the preferred second embodiment of an electrode catalyst of the present invention.

(First embodiment)

In the following, by referring FIG.1, the main structure of the first embodiment of the electrode catalyst (core-shell catalyst) of the present invention is explained.

As shown in FIG.1, an electrode catalyst 10A of the first embodiment includes a support 2, and catalyst particles 3a supported on the support 2 and having a so-called "core-shell structure".

Further, the catalyst particle 3 has a so-called "core-shell structure" where a core part 4 formed on the support 2, a first shell part 5a, a second shell part 6a formed on a part of the surface of the first shell 5a.

In addition, the elements of the components (chemical composition) of the core part 4, and the elements of the components (chemical composition) of the first shell part 5a and the second shell part 6a are different. In case of the electrode catalyst 10A shown in FIG.1, almost of all range of the surface of the core part 4 is covered with the first shell part 5a. Further, the surface of the first shell part 5a is partly covered with the second shell part 6a. Furthermore, a part of the surface of the first shell part 5a where is not covered with the second shell part 6a (exposed surface of the first shell part 5s) is externally exposed.

The core part 4 contains Pd, the first shell part 5a contains Pt and the second shell part 6a contains the Ti oxide. When employing this structure (TiOx / Pt / Pd / C), since the Ti oxide is disposed near the Pt of the first shell part 5a, in comparison with the Pt / Pd / C catalyst, the electrode catalyst 10A has the catalyst activity (oxygen reduction activity) higher than or equal thereto, and contributes to the low cost.

(Second embodiment)

In the following, by referring FIG.2, the main structure of the second embodiment of the electrode catalyst of the present invention is explained.

In comparison with the electrode catalyst 10A shown in FIG.1, the electrode catalyst 10B shown in FIG.2, in the catalyst particle 3b, may be in a state where a part of the surface of the core part 4 is covered with the first shell part 5b, 5c, and the rest part of the surface of the core part 4 is partially exposed (e.g. a state where a part 4s of the surface of the core part 4 shown in FIG.2 being exposed). In other words, as is the case with the electrode catalyst 10B shown in FIG.2, in the catalyst particle 3b, the first shell part 5b, 5c is partially formed on a part of the surface of the core part 4.

Therefore, in the electrode catalyst of the present invention, the first shell part 5b, 5c may be formed on at least a part of the surface of the core part 4, within the scope where the effects of the present invention can be obtained. Even in this structure, since the Ti oxide which is contained in the second shell part 6b is disposed neat the Pt of the first shell part 6a, the electrode catalyst 10B has the catalyst activity higher than or equal to the Pt / Pd / C catalyst, and contributes to the low cost.

(Common features of first embodiment and second embodiment)

In the following, the common features between the electrode catalyst 10A shown in FIG.1, the electrode catalyst 10B shown in FIG.2 are explained.

It is preferable that the first shell part 5a, 5b is composed of Pt alone from the view point that good catalyst properties (hydrogen oxidation activity, oxygen reduction activity) can be easily obtained. It is preferable that the second shell part 6a, 6b, 6c is composed of the $TiO_2$ oxide having a high chemical stability alone from the view point that good catalyst properties (hydrogen oxidation activity, oxygen reduction activity) can be easily obtained in the first shell part 5a, 5b. It is preferable that the core part 4 is composed of Pd alone from the view point that good catalyst properties (hydrogen oxidation activity, oxygen reduction activity) can be easily obtained in the first shell part 5a, 5b.

Furthermore, from the viewpoint to obtain the effects of the present invention more reliably, the electrode catalysts 10A, 10B satisfy the following condition.

Namely, in the electrode catalysts 10A, 10B, a percentage $R1_{Pt}$ (atom %) of Pt and a percentage $R1_{Ti}$ (atom %) of the Ti derived from the Ti oxide in an analytical region near the surface when measured by X-ray photoelectron spectrum analysis (XPS) satisfy the conditions of the following equation (1).

$$1.00 \leq (R1_{Ti} / R1_{Pt} \leq 2.50 \qquad (1)$$

The present inventors have found that, when the chemical composition of the analytical region near the surface of the catalyst particle 3a, 3b of the electrode catalyst 10A, 10B is made to be the structure where the condition of the above equation (1) is satisfied (structure where a percentage of the Ti oxide is relatively large), the effects of the present invention can be obtained more reliably.

Though the detailed mechanism has not yet been found, the present inventors seem that, when the Ti oxide of the second shell part 6a, 6b, 6c satisfies the above equation (1) exists on the surface of the first shell part 5a, 5b, 5c of the catalyst particle 3a, 3b, the reduction reaction of oxygen on the Pt of the first shell part 5a, 5b, 5c is promoted.

For example, when the Ti oxide of the second shell part 6a, 6b, 6c exists near the Pt of the first shell part 5a, 5b, 5c, water yielded by the reduction reaction of oxygen on the Pt can smoothly move from the Pt to the Ti oxide side, which promotes the reduction reaction of oxygen.

In the present invention, the X-ray photoelectron spectrum analysis (XPS) is carried out under the following (A1) to (A5) conditions.

(A1) X-ray source: Monochromatic AlKα
(A2) Photoelectron taking out angle: θ=75 ° C
(A3) Charge correction: Correcting on the basis that C1s peak energy is 284.8 eV (A4) Analytical region: 200 μm
(A5) Chamber pressure at analyzing: about 1 x 10$^{-6}$ Pa

Here, the photoelectron taking out angle θ of (A2) is an angle θ, as shown in FIG.3, when an X-ray emitted from an X-ray source 32 is irradiated to a sample set on a sample stage 34, and a photoelectron emitted from the sample is received by a spectroscope 36. Namely, the photoelectron taking out angle θ corresponds to an angle of the light receiving axis of the spectroscope 36 to the surface of the layer of the sample on the sample stage 34.

From the viewpoint to obtain the effects of the present invention more reliably, it is preferred that the electrode catalysts 10A, 10B satisfy the following condition.

Namely, it is preferable that in the electrode catalysts 10A, 10B, a percentage $R1_{Pt}$ (atom %) of Pt, a percentage $R1_{Pd}$ (atom %) of Pd, and a percentage $R1_{Ti}$ (atom %) of the Ti derived from the Ti oxide in an analytical region near the surface when measured by X-ray photoelectron spectrum analysis (XPS) satisfy the conditions of the following equation (2).

$$0.20 \leq \{(R1_{Ti} / (R1_{Pt} + R1_{Pd} + R1_{Ti})) \leq 0.50 \qquad (2)$$

The present inventors have found that, in addition to the aforementioned condition of the equation (1), when the chemical composition of the analytical region near the surface of the catalyst particle 3a, 3b of the electrode catalyst 10A, 10B is made to be the structure where the condition of the above equation (2) is satisfied (structure where a percentage of the Ti oxide is relatively large to the Pt), the effects of the present invention can be obtained more reliably.

Though the detailed mechanism has not yet been found, the present inventors seem that, in addition to the condition of the equation (1), when the Ti oxide which satisfies the above equation (2) exists on or near the surface of the catalyst particle 3a, 3b, the reduction reaction of oxygen on the Pt of the first shell part 5a, 5b, 5c of the catalyst particle 3a, 3b is promoted. For example, when the Ti oxide contained in the second shell part 6a, 6b, 6c exists near the Pt of the first shell part 5a, 5b, 5c, water yielded by the reduction reaction of oxygen on the Pt can smoothly move from the Pt to the Ti oxide side, which promotes the reduction reaction of oxygen.

In the equation (2), XPS is also measured under the aforementioned (A1) to (A6) conditions.

Further, it is preferable that in the electrode catalyst 10A, 10B, an average value of crystallite size of the crystal particle 3a, 3b measured by powder X-ray diffraction (XRD) is 3 to 35.0 nm.

It is preferable that the average value of the crystallite size is 3 nm or more, since there tends largely to form the particles to be the core part 4 on the support 2 more easily. Further, it is preferable that the average value of the crystallite size is 35.0 nm or less, since it is easy to form the particles to be the core part 4 on the support 2 under highly dispersing state. Further, from the same point of view, the average value of crystallite size of the crystal particle 3a, 3b measured by powder X-ray diffraction (XRD) is more preferably 3 to 20 nm, further preferably 3 nm or more and less than 20 nm.

As for the thicknesses of the first shell part 5a, 5b, 5c, a preferable range thereof is to be appropriately determined based on the design concept of the electrode catalyst. Also, as for the thicknesses of the second shell part 6a, 6b, 6c, a preferable range thereof is to be appropriately determined based on the design concept of the electrode catalyst.

For example, when the amount of Pt used to compose the first shell part 5a, 5b, 5c is intended to be minimized, a layer composed of one atom (one atomic layer) is preferred, and in this case, when there is only one kind of metal element composing the first shell part 5a, 5b, 5c, it is preferred that the thickness of the first shell part 5a, 5b, 5c be twice as large as the diameter of one atom of such metal element (provided that an atom is considered as a sphere).

Further, when the metal elements contained in the first shell part 5a, 5b, 5c is two or more, it is preferred that the thickness is equivalent to that of a layer composed of one atom (one atomic layer formed with two or more kinds of atoms being provided in the surface direction of the core part 4).

For example, if the durability of the electrode catalyst is to be further improved by making the thickness of the first shell part 5a, 5b, 5c larger, the thickness is preferably 1 to 5 nm, more preferably 2 to 10 nm.

The first shell part 5a, 5b, 5c contains Pt. From the viewpoint of obtaining the effects of the present invention more reliably, and from the viewpoint of production easiness, it is preferable that the shell part 6, 6a, 6b, 6c, 6d is composed of Pt as a main component (50 wt % or more), further preferable is composed of Pt.

Here, in the present invention, "average particle size" refers to an average value of the diameters of an arbitrary number of particles as particle groups that are observed through electron micrographs.

The thickness of the second shell part 6a, 6b, 6c is not particularly limited within the scope where the effects of the present invention can be obtained.

There are no particular restrictions on the support 2, as long as such being capable of supporting the complexes composed of the core part 4 and the first shell part 5a, 5b, 5c and the second shell part 6a, 6b, 6c, and has a relatively large surface area.

Moreover, it is preferred that the support 2 be that exhibiting a favorable dispersibility and a superior electrical conductivity in a composition used to form a gas diffusion electrode having the electrode catalyst 10A, 10B.

The support 2 may be appropriately selected from carbon-based materials such as glassy carbon (GC), fine carbon, carbon black, black lead, carbon fiber, activated carbon, ground product of activated carbon, carbon nanofiber and carbon nanotube; and glass-based or ceramic-based materials such as oxides.

Among these materials, carbon-based materials are preferred in terms of their adsorptivities with respect to the core part 4 and in terms of a BET specific surface area of the support 2.

Further, as a carbon-based material, an electrically conductive carbon is preferred, and particularly, an electrically conductive carbon black is preferred as an electrically conductive carbon.

Examples of such electrically conductive carbon black include products by the names of "Ketjenblack EC300 J," "Ketjenblack EC600" and "Carbon EPC" (produced by Lion Corporation).

The core part 4 is not particularly limited as long as Pd is included. When producing the electrode catalyst 10A, 10B, it is preferable that the preferred conditions mentioned in the above equation (1), the equation (2), the equation (3), and the like are satisfied.

(Modified embodiment)

In the above, the preferred embodiment of the electrode catalyst of the present invention, but the electrode catalyst of the present invention is not limited thereto.

For example, the electrode catalyst of the present invention may be a state where at least two of the electrode catalyst 10 shown in FIG.1 and the electrode catalyst 10A shown in FIG.2 coexist in a mixed manner, within the scope where the effects of the present invention can be obtained (not shown).

Furthermore, within the scope where the effects of the present invention can be obtained, the electrode catalyst 10A, 10B may also be in a state where "particles only composed of the core part 4 that are not covered with the second shell part 6a, 6b, 6c and the first shell part 5a, 5b, 5c" are supported on the support 2, in addition to at least one of the above catalyst particle 3a, 3b (not shown).

Furthermore, within the scope where the effects of the present invention can be obtained, the electrode catalyst 10A, 10B may also include a state where "particles only composed of the constituent element of the second shell part 6a, 6b, 6c" and "particles only composed of the constituent element of the first shell part 5a, 5b, 5c" are supported without being in contact with the core part 4, in addition to at least one of the catalyst particle 3a, 3b (not shown).

Furthermore, within the scope where the effects of the present invention can be obtained, the electrode catalyst 1 may also be in a state where "particles only composed of the core part 4 that are not covered with the second shell part 6a, 6b, 6c and the first shell part 5a, 5b, 5c", "particles only composed of the constituent element of the second shell part 6a, 6b, 6c" and "particles only composed of the constituent element of the first shell part 5a, 5b, 5c" are individually supported, in addition to at least one of the electrode catalyst 10, the electrode catalyst 10A, the electrode catalyst 10B and the electrode catalyst 10C (not shown).

<Preparation method of the electrode catalyst 10A, 10B>

The preparation method of the electrode catalyst 10A, 10B includes the "core particle forming step" where the core particles containing the Pd are formed on the support, the "first shell part forming step" where the first shell part 5a, 5b, 5c is formed on at least one of the surface of the core particle obtained by the core particle forming step, and the "second shell part forming step" where the second shell part 6a, 6b, 6c containing the Ti oxide is formed on a part of the surface of the composite particle of the first shell part 5a, 5b, 5c and the core part obtained by the first shell part forming step.

The electrode catalyst 10A, 10B is produced by supporting the core part 4, the first shell part 5a, 5b, 5c and the second shell part 6a, 6b which configure the catalyst particles 3a, 3b on the support 2 in this order.

The preparation method of the electrode catalyst 10A, 10B is not particularly limited as long as the method allows the catalyst particles 3a, 3b to be supported on the support 2.

Examples of the production method include an impregnation method where a solution containing the catalyst component is brought into contact with the support 2 to impregnate the support 2 with the catalyst components; a liquid phase reduction method where a reductant is put into a liquid containing the catalyst component; an electrochemical deposition method such as under-potential deposition (UPD); a chemical reduction method; a reductive deposition method using adsorption hydrogen; a surface leaching method of alloy catalyst; an immersion plating method; a displacement plating method; a sputtering method; and a vacuum evaporation method, and the like.

In the "core particle forming step", the core particle containing the Pd is formed on the support by combining the aforementioned known techniques or the like so as to satisfy the aforementioned condition of the equation (1) and the preferred conditions of the equations (2), (3). At this time, it is preferable to regulate the raw materials, blend ratios of the raw materials, reaction conditions of the synthetic reactions, and the like. For example, the liquid phase reduction may be carried out by contacting the support 2 with a solution containing the materials of the core part 4 to impregnating the support 2 with the materials of the core part 4, and then adding a reductant.

In the "first shell part forming step", the second shell part 6a, 6b, 6c containing the Ti oxide is formed on a part of the surface of the composite particle of the first shell part 5a, 5b, 5c and the core part obtained by the first shell part forming step by combining the aforementioned known techniques or the like so as to satisfy the aforementioned condition of the equation (1) and the preferred conditions of the equations (2), (3). At this time, it is preferable to regulate the raw materials, blend ratios of the raw materials, reaction conditions of the synthetic reactions, and the like. For example, the first shell part 5a, 5b, 5c can be formed by preparing a powder where the particles to give the core part 4 are supported on the support 2, and a liquid containing the materials of the first shell part, and then subjecting to a known coating method such as an electrochemical deposition method such as under-potential deposition (UPD); a chemical reduction method; a reductive deposition method using adsorption hydrogen; a surface leaching method of alloy catalyst; immersion plating; a displacement plating method; a sputtering method; or a vacuum evaporation method.

In the "second shell part forming step", the second shell part 6a, 6b, 6c containing the Ti oxide is formed on a part of the surface of the composite particle of the first shell part 5a, 5b, 5c and the core part obtained by the first shell part forming step by combining the aforementioned known techniques or the like so as to satisfy the aforementioned condition of the equation (1) and the preferred conditions of the equations (2), (3). At this time, it is preferable to regulate the raw materials of the Ti oxide, blend ratios of the raw materials, reaction conditions of the synthetic reactions, and the like. For example, the liquid phase reduction may be carried out by contacting the powder obtained through the first shell part forming step with a solution containing the materials of the second shell part 6a, 6b, 6c to impregnating the powder with the materials of the second shell part 6a, 6b, 6c, and then adding a reductant.

As a method for preparing the electrode catalyst 10A, 10B so as to satisfy the aforementioned condition of the equation (1) and the preferred conditions of the equations (2), (3), for example, there is a method where the chemical formulation and structure of the resulting product (catalyst) are analyzed by various known analytical techniques, the obtained analyzed data are fed back to the production process, and then the raw materials to be selected, the blend ratios of the raw materials, the synthetic reaction to be selected, the reaction conditions of the selected synthetic reaction, and the like are regulated and varied, and the like.

<Structure of fuel cell>

FIG.4 is a schematic view showing preferable embodiments of a composition for forming gas diffusion electrode containing the electrode catalyst of the present invention; a gas diffusion electrode produced using such composition for forming gas diffusion electrode; a membrane-electrode assembly (Membrane Electrode Assembly: hereinafter referred to as "MEA" if necessary) having such gas diffusion electrode; and a fuel cell stack having such MEA.

The fuel cell stack 40 shown in FIG.4 has a structure where the MEA 42 is one-unit cell, and the multiple layers of such one-unit cells are stacked.

Further, the fuel cell stack 40 has the MEA 42 that is equipped with an anode 43 of the gas diffusion electrode, a cathode 44 of the gas diffusion electrode, and an electrolyte membrane 45 provided between these electrodes.

Furthermore, the fuel cell stack 40 has a structure where the MEA 42 is sandwiched between a separator 46 and a separator 48.

In the following, there are described the composition for forming gas diffusion electrode, the anode 43 and cathode 44 of the gas diffusion electrode, the MEA 42, all of which serve as members of the fuel cell stack 40 containing the electrode catalyst of the present invention.

<Composition for forming gas diffusion electrode>

The electrode catalyst of the present invention can be used as a so-called catalyst ink component and serve as the composition for forming gas diffusion electrode in the present invention.

One feature of the composition for forming gas diffusion electrode of the present invention is that this composition contains the electrode catalyst of the present invention.

The main components of the composition for forming gas diffusion electrode are the aforementioned electrode catalyst and an ionomer solution. The composition of the ionomer solution is not particularly limited. For example, the ionomer solution may contain a polyelectrolyte exhibiting a hydrogen ion conductivity, water and an alcohol.

The polyelectrolyte contained in the ionomer solution is not particularly limited. Examples of such polyelectrolyte include known perfluorocarbon resins having sulfonate group, carboxylic acid group. As an easily obtainable hydrogen ion-conductive polyelectrolyte, there can be listed, for example, Nafion (registered trademark of Du Pont), ACIPLEX (registered trademark of Asahi Kasei Chemical Corporation) and Flemion (registered trademark of ASAHI GLASS Co., Ltd).

The composition for forming gas diffusion electrode can be produced by mixing, crushing and stirring the electrode catalyst and the ionomer solution.

The composition for forming gas diffusion electrode may be prepared using crushing and mixing machines such as a ball mill and/or an ultrasonic disperser. A crushing and a stirring condition at the time of operating a crushing and mixing machine can be appropriately determined in accordance with the mode of the composition for forming gas diffusion electrode.

The composition of each of the electrode catalyst, water, alcohol and hydrogen ion-conductive polyelectrolyte that are contained in the composition for forming gas diffusion electrode may be set so as to be that capable of achieving a favorable dispersion state of the electrode catalyst, allowing the electrode catalyst to be distributed throughout an entire catalyst layer of the gas diffusion electrode and improving the power generation performance of the fuel cell.

<Gas diffusion electrode>

The anode 43 of the gas diffusion electrode has a structure having a gas diffusion layer 43a and a catalyst layer 43b which is provided on the surface of the gas diffusion layer 43a at an electrolyte membrane 45 side.

The cathode 44 has, in the same manner as the anode 43, a structure having a gas diffusion layer (not shown) and a catalyst layer (not shown) which is provided on the surface of the gas diffusion layer at an electrolyte membrane 45 side.

The electrode catalyst of the present invention may be contained in the catalyst layer of at least one of the anode 43 and the cathode 44. Further, it is preferable to be contained in the both catalyst layers of the anode 43 and the cathode 44.

The gas diffusion electrode can be used as an anode, and also can be used as a cathode.

Since the gas diffusion electrode (the anode 43 and/or the cathode 44) according to the present invention contains the electrode catalyst of the present invention, it is possible to produce easily a gas diffusion electrode which has the catalyst activity (polarization property) and durability higher than or equal to the gas diffusion electrode containing the Pt / Pd / C catalyst, and contributes to the low cost.

(Electrode catalyst layer)

In the case of the anode 43, the catalyst layer 43b serves as a layer where a chemical reaction of dissociating a hydrogen gas sent from the gas diffusion layer 43a into hydrogen ions takes place due to the function of the electrode catalyst 10 contained in the catalyst layer 43b. Further, in the case of the cathode 44, the catalyst layer 43b serves as a layer where a chemical reaction of bonding an air (oxygen gas) sent from the gas diffusion layer 43a and the hydrogen ions that have traveled from the anode 43 through the electrolyte membrane takes place due to the function of the electrode catalyst 10 contained in the catalyst layer 43b.

The catalyst layer 43b is formed using the abovementioned composition for forming gas diffusion electrode. It is preferred that the catalyst layer 43b have a large surface area such that the reaction between the electrode catalyst 10 and the hydrogen gas or air (oxygen gas) sent from the diffusion layer 43a is allowed take place to the fullest extent. Moreover, it is preferred that the catalyst layer 43b be formed in a manner such that the catalyst layer has a uniform thickness as a whole. The thickness of the catalyst layer 43b can be appropriately adjusted and is not particularly limited, and preferably is 2 to 200 $\mu$m.

(Gas diffusion layer)

The gas diffusion layer equipped to the anode 43 of the gas diffusion electrode and the cathode 44 of the gas diffusion electrode serves as a layer provided to diffuse to each of the corresponding catalyst layers the hydrogen gas introduced from outside the fuel cell stack 40 into gas flow passages that are formed between the separator 46 and the anode 43, and the air (oxygen gas) introduced into gas passages that are formed between the separator 48 and the cathode 44.

In addition, the gas diffusion layer plays a role of supporting the catalyst layer so as to immobilize the catalyst layer to the surface of the gas diffusion electrode.

The gas diffusion layer has a function of favorably passing the hydrogen gas or air (oxygen gas) and then allowing such hydrogen gas or air to arrive at the catalyst layer. For this reason, it is preferred that the gas diffusion layer have a water-repellent property. For example, the gas diffusion layer has a water repellent component such as polyethylene terephthalate (PTFE).

There are no particular restrictions on a material that can be used in the gas diffusion layer, and there can be employed a material known to be used in a gas diffusion layer of a fuel cell electrode. For example, there may be used a carbon paper; or a material made of a carbon paper as a main raw material and an auxiliary raw material applied to the carbon paper as the main raw material, such auxiliary raw material being composed of a carbon powder as an optional ingredient, an ion-exchange water also as an optional ingredient and a polyethylene terephthalate dispersion as a binder.

The anode 43 of the gas diffusion electrode and the cathode 44 of the gas diffusion electrode may have an intermediate layer (not shown) between the gas diffusion layer and the catalyst layer.

(Production method of gas diffusion electrode)

A production method of the gas diffusion electrode is now explained. The gas diffusion electrode of the present invention may be produced so that the electrode catalyst of the present invention is a structural component of the catalyst layer, and the method of production is not particularly limited, and any known production method can be employed.

For example, the gas diffusion electrode may be produced through a step of applying the composition for forming gas diffusion electrode which contains the electrode catalyst, the hydrogen ion-conductive polyelectrolyte and the ionomer to the gas diffusion layer, and a step of drying such gas diffusion layer to which the composition for forming gas diffusion electrode has been applied to form the catalyst layer.

<Membrane-electrode assembly (MEA)>

The MEA 42 of the preferred embodiment of the MEA according to the present invention shown in FIG.4 has a structure having the anode 43, the cathode 44 and the electrolyte membrane 45. The MEA 42 has a structure where at least one of the anode 43 and the cathode 44 has the gas diffusion electrode containing the electrode catalyst of the present invention.

Since the MEA 42 contains the gas diffusion electrode of the present invention, it is possible to give easily the structure which has the catalyst activity and durability higher than or equal to the MEA which contains the Pt / Pd / C catalyst in the gas diffusion electrode, and contributes to the low cost.

The MEA 42 can be produced by stacking the anode 43, the electrolyte 300, and the cathode 44 in this order, and then bonded under pressure.

<Fuel cell stack>

When one-unit cell (single cell) has a structure where the separator 46 is disposed on the outer side of the anode 43 of the MEA 42 and the separator 48 is disposed on the outer side of the cathode 44, the fuel cell stack 40 of the preferred embodiment of the fuel cell stack according to the present invention shown in FIG.4 is composed of only one-unit cell or an integrated structure of two or more (not shown).

Since the fuel cell stack 40 contains the MEA 42 of the present invention, it is possible to give easily the structure which has the catalyst activity and durability higher than or equal to the fuel cell stack containing at least one MEA which contains the Pt / Pd / C catalyst in the gas diffusion electrode, and contributes to the low cost.

The fuel cell system is completed by attaching peripheral devices to the fuel cell stack 40 and assembling them.

EXAMPLE

In the following, the present invention is more specifically explained by referring working examples, but the present invention is not limited to the following working examples.

(I) Prevision of electrode catalyst for Examples and Comparative Examples

(Example 1)

<Production of electrode catalyst>

["TiO$_2$ / Pt / Pd / C" powder where the second shell part of the TiO$_2$ is formed on Pt / Pd / C]
A "TiO$_2$ / Pt / Pd / C" powder {Trade name "NE-HT1215-CFC", available from N.E.CHEMCAT} where the second shell part of the TiO$_2$ is formed on a part of the first shell part of Pt of the particle of the following "Pt / Pd / C" powder was prepared as an electrode catalyst of Example 1.
The TiO$_2$ / Pt / Pd / C powder was prepared by heat-treating the following Pt / Pd / C powder and a commercially available Ti compound under a reduction atmosphere.
It was confirmed, as a result of the XRD and XPS analyses, that the Ti oxide of the TiO$_2$ / Pt / Pd / C powder was composed of TiO$_2$.

["Pt / Pd / C" powder where the shell part of Pt is formed on Pd / C]

A "Pt / Pd / C" powder {Trade name "NE-H1215-BC", available from N.E.CHEMCAT} where the shell part of Pt is formed on Pd of the particle of the following "Pd / C" powder was prepared as an electrode catalyst of Comparative Example 1.
This Pt / Pd / C powder was a powder which was prepared by forming the shell part of Pt on the Pd particle in the following Pd / C powder by adjusting the conditions of the UPD method.

[Core particle supporting carbon "Pd / C" powder]

A "Pd / C" powder {Trade name "NE-H0200-C", available from N.E.CHEMCAT} where the core particle of Pd was supported on the carbon black powder was prepared.
This Pd / C powder was prepared according to the following manner. At first, a powder where the Pd particles were supported on the carbon powder was obtained by preparing a mixed solution of a commercially available carbon black powder (specific surface area 750 to 850 m$^2$/g), sodium tetrachloropalladate(II) and water, and adding thereto a reductant, and then reducing palladium ion in the solution.

<Surface analysis of electrode catalyst by X-ray photoelectron spectroscopy (XPS)>

With respect to the electrode catalyst of Example 1, the surface analysis was conducted by the XPS to measure the percentage R1$_{Pt}$ (atom %) of Pt, the percentage R1$_{Pd}$ (atom %) of Pd, and the percentage R1$_{Ti}$ (atom %) of Ti derived from the TiO$_2$.
Specifically, the analysis was conducted by using "Quantera SXM" (available from ULVAC-PHI, Inc.) as the XPS under the following conditions.

(A1) X-ray source: Monochromatic AlKα
(A2) Photoelectron taking out angle: θ=75 °C (referring FIG.3)
(A3) Charge correction: Correcting on the basis that C1s peak energy is 284.8 eV
(A4) Analytical region: 200 μm
(A5) Chamber pressure at analyzing: about 1 x 10$^{-6}$ Pa
(A6) Measuring depth (Escaping depth): about 5 nm or less

The results of the analysis are shown in TABLE 1. When calculating the percentage R1$_{Pt}$ (atom %) of Pt, the percentage R1$_{Pd}$ (atom %) of Pd and the percentage R1$_{Ti}$ (atom %) of Ti derived from the TiO$_2$, the numerical value are calculated so that the sum of the three components is 100 %. Namely, in the analytical region near a surface of the electrode catalyst, a percentage of carbon (atom %) detected other than the Pt, the Pd and the TiO$_2$ is omitted from the calculation. The values of the (R1$_{Ti}$ / R1$_{Pt}$) and the values of the {R1$_{Ti}$ / (R1$_{Pt}$ + R1$_{Pd}$ + R1$_{Ti}$)} are shown in TABLE 1.

<Measurement (ICP analysis) of support rate>

With respect to the electrode catalyst of Example 1, the support rate L$_{Pt}$ (wt %) of Pt, the support rate L$_{Pd}$ (wt %) of Pd and the support rate L$_{Ti}$ (wt %)of Ti were measured by the following method.
The electrode catalyst of the working example 1 was immersed in an aqua regia to dissolve the metal. Then, carbon as an insoluble component was removed from the aqua regia. Next, the aqua regia from which carbon had been removed was subjected to ICP analysis.

The results of the ICP analysis and the values of the $\{L_{Ti} / (L_{Pt} + L_{Pd} + L_{Ti})\}$ are shown in TABLE 1.

<Surface observation · structural observation of electrode catalyst>

With respect to the electrode catalyst of Example 1, as a result of confirming STEM-HAADF image and EDS elemental mapping image, it was confirmed that the electrode catalyst had a structure where the catalyst particles having a core-shell structure where a layer of Pt of the first shell part was formed on almost of all surface of the particle of the core part of Pd were supported on the electrically conductive carbon support.

(Example 2)

The electrode catalyst of Example 2 was produced by employing the same preparation conditions and the same raw materials except that the amounts of the raw materials to be used and the reaction conditions, and the like were controlled slightly so that the catalyst had the results of the XPS analysis of the surface of the electrode catalyst $(R1_{Ti} / R1_{Pt})$ and $\{R1_{Ti} / (R1_{Pt} + R1_{Pd} + R1_{Ti})\}$, the results of the ICP analysis of the whole electrode catalyst $(L_{Pt}, L_{Pd}, L_{Ti})$ shown in TABLE 1.

The XPS analysis and the ICP analysis were conducted in the same conditions as Example 1.

Further, with respect to the electrode catalyst of Example 2, as a result of confirming STEM-HAADF image and EDS elemental mapping image, it was confirmed that the electrode catalyst had a structure where the catalyst particles having a core-shell structure where a layer of Pt of the first shell part was formed on almost of all surface of the particle of the core part of Pd were supported on the electrically conductive carbon support.

(Comparative Example 1)

<Production of electrode catalyst>

The electrode catalyst of Comparative Example 1 has the same structure as of the electrode catalysts of Example 1 and Example 2 excepting that the second shell part is not formed.

["Pt / Pd / C" powder where the shell part of Pt is formed on Pd / C]

A "Pt / Pd / C" powder {Trade name "NE-H1215-BC", available from N.E.CHEMCAT} where the shell part of Pt is formed on Pd of the particle of the following "Pd / C" powder was prepared as an electrode catalyst of Comparative Example 1.

This Pt / Pd / C powder was a powder which was prepared by forming the shell part of Pt on the Pd particle in the following Pd / C powder by adjusting the conditions of the UPD method.

[Core particle supporting carbon "Pd / C" powder]

A "Pd / C" powder {Trade name "NE-H0200-C", available from N.E.CHEMCAT} where the core particle of Pd was supported on the carbon black powder was prepared.

This Pd / C powder was prepared according to the following manner. At first, a powder where the Pd particles were supported on the carbon powder was obtained by preparing a mixed solution of a commercially available carbon black powder (specific surface area 750 to 850 $m^2$/g), sodium tetrachloropalladate(II) and water, and adding thereto a reductant, and then reducing palladium ion in the solution.

The electrode catalyst of Comparative Example 1 was also subjected to the XPS analysis and the ICP analysis under the same conditions as those of the electrode catalyst of Example 1. The results are shown in TABLE 1.

Further, with respect to the electrode catalyst of Example 2, as a result of confirming STEM-HAADF image and EDS elemental mapping image, it was confirmed that the electrode catalyst had a structure where the catalyst particles having a core-shell structure where a layer of Pt of the first shell part was formed on almost of all surface of the particle of the core part of Pd were supported on the electrically conductive carbon support.

(II) Production of composition for forming gas diffusion electrode

A powder of each of the electrode catalysts of Example 1, Example 2 and Comparative Example 1 was taken by an amount of about 8.0 mg through measurement, and was put into a sample bottle together with an ultrapure water of 2.5 mL, followed by mixing the same while under the influence of an ultrasonic irradiation, thus producing a slurry (suspension) of the electrode catalyst.

Next, there was prepared a Nafion-ultrapure water solution by mixing an ultrapure water of 10.0 mL and a 10 wt% Nafion (registered trademark) dispersion aqueous solution (product name "DE1020CS" by Wako Chemical Ltd.) of 20 $\mu$L in a different container.

The Nafion-ultrapure water solution of 2.5 mL was slowly poured into the sample bottle containing the slurry (suspension) of the electrode catalyst, followed by thoroughly stirring the same at a room temperature for 15 min while under the influence of an ultrasonic irradiation, thus obtaining a composition for forming gas diffusion electrode.

(III) Formation of electrode layer on electrode for evaluation test

For preparation of evaluation test of the electrode catalyst by a rotating disk electrode method (RDE method) mentioned after, a catalyst layer CL (referring to FIG.5) containing a powder of the electrode catalyst of Example 1, a catalyst layer CL (referring to FIG.5) containing a powder of the electrode catalyst of Example 2, a catalyst layer CL (referring to FIG.5) containing a powder of the electrode catalyst of Comparative Example 1, a catalyst layer CL (referring to FIG.5) containing a powder of the electrode catalyst of Comparative Example 2 were formed on the electrode surface of a rotating disk electrode WE (referring FIG.5) according to the following manner.

Namely, the composition for forming gas diffusion electrode was taken out by an amount of 10 $\mu$L, and was dropped onto the clean surface of the rotating disk electrode WE. Thereafter, the composition was applied to the whole surface of the electrode of the rotating disk electrode WE to form a coating layer. The coating film made of the composition for forming gas diffusion electrode was dried under a temperature of 23°C and a humidity of 50% RH for 2.5 hours to form the catalyst layer CL on the surface of the rotating disk electrode WE.

(IV) Evaluation test of catalyst activity of electrode catalyst

Next, by using the rotating disk WE where the catalyst layer CL including the electrode catalyst of Example 1, Example 2 was formed and the rotating disk WE where the catalyst layer CL including the electrode catalyst of Comparative Example 1 was formed, the evaluation test of catalyst activity and the evaluation test of durability were conducted according to the following manner.

In addition, a mass activity of platinum (Mass Act, mA/g-Pt) at +0.9 V (vs RHE) was measured by the rotating disk electrode method (RDE method) according to the following manner.

[Configuration of rotating disk electrode measuring apparatus]

FIG.5 is a schematic diagram showing a schematic configuration of a rotating disk electrode measuring device 50 used in the rotating disk electrode method (RDE method).

As shown in FIG.5, the rotating disk electrode measuring device 50 mainly includes a measuring cell 51, a reference electrode RE, a counter electrode CE, a rotating disk electrode WE and an electrolyte solution ES. In addition, when evaluating the catalyst, an electrolyte solution ES was added to the measuring cell 51.

The measuring cell 51 has almost cylindrical shape having an opening at the upper surface, and a fixing member 52 of the rotating disk electrode WE which is also a gas-sealable rid is disposed at the opening. At the center of the fixing member 52, a gas-sealable opening is disposed for inserting and fixing the main body of the electrode of the rotating disk electrode WE into the measuring cell 51.

On the side of the measuring cell 51, an almost L-shaped Luggin tube 53 is disposed. Further one end of the Luggin tube 53 has a Luggin capillary which can be inserted into the inside of the measuring cell 51, the electrolyte solution ES of the measuring cell 51 also enters to the inside of the Luggin tube 53. The other end of the Luggin tube 53 has an opening, the reference electrode RE can be inserted into the Luggin tube 53 from the opening.

As the rotating disk electrode measuring apparatus 50, "Model HSV110 available from Hokuto Denko Corp. was used. An Ag / AgCl saturated electrode was used as the reference electrode RE, a Pt mesh with Pt black was used as the counter electrode CE, and an electrode having a diameter of 5.0 mm$\varphi$, area of 19.6 mm$^2$ available from Glassy Carbon Ltd. Was used as the rotating disk electrode WE. Further, HClO$_4$ of 0.1M was used as the electrolyte solution ES.

[Cleaning of rotating disk electrode WE]

As shown in FIG.5, after dipping the rotating disk electrode WE in the HClO$_4$ electrolyte solution ES within the above rotating disk electrode measuring apparatus 50, the oxygen in the electrolyte solution ES was purged for 30 minutes or more with an argon gas by introducing the argon gas from a gas introducing tube 54 which was connected to the side of the measuring cell 51 into the measuring cell 51.

Then, the sweeping was carried out for 20 cycles in the manner that the potential (vs RHE) of the rotating disk electrode WE to the reference electrode RE was so-called "potential sweeping mode of chopping waves" where the potential (vs RHE) of the rotating disk electrode WE to the reference electrode RE was +85 mV to +1085 mV, and a scanning rate was 50 mv/sec.

[Evaluation of initial electrochemical area (ECSA)]

Next, the sweeping was carried out of in the manner that the potential (vs RHE) of the rotating disk electrode WE to the reference electrode RE was so-called "potential sweeping mode of rectangular waves" as shown in FIG.6.

More specifically, the potential sweeping where the following operations (A) to (D) were to be one cycle was carried out 6 cycles.

(A) Potential at the start of sweep: +600 mV, (B) Sweeping from +600 mV to +1000 mV, (C) Keeping at +1000 mV for 3 seconds, (D) Sweeping from +1000 mV to +600 mV, (E) Keeping at +600 mV for 3 seconds.

Next, the CV measurement was carried out for 3 cycles in the manner that the potential (vs RHE) of the rotating disk electrode WE was so-called "potential sweeping mode of chopping waves" where a potential at the start of measurement was +119 mV, +50 mV to +1200 mV, a scanning rate was 20 mv/sec. The rotation speed of the rotating disk electrode WE was 1600 rpm.

Next, after bubbling the electrolyte solution ES in the measuring cell 51 with an oxygen gas for 15 minutes or more, the CV measurement was carried out for 10 cycles under the condition of so-called "potential sweeping mode of chopping waves" where the scanning potential was +135 mV to +1085 mV vs RHE, a scanning rate was 10 mv/sec, and the rotation speed of the rotating disk electrode WE was 1600 rpm.

The current value at a potential of the rotating disk electrode of +900 mV vs RHE was recorded.

In addition, by setting the rotation speed of the rotating disk electrode WE at 400 rpm, 625 rpm, 900 rpm, 1225 rpm, 2025 rpm, 2500 rpm, and 3025 rpm, the oxygen reduction (ORR) current measurement was carried out by one cycle.

Utilizing the results obtained from the CV measurement, the Pt mass activity (Mass ACT) (mA/$\mu$g-Pt@0.9V) was calculated.

The results obtained in Example 1, Example 2, Comparative Example 1 are shown in TABLE 1.

In TABLE 1, the Pt mass activities (Mass ACT) of Example 1, Example 2 are shown as a relative value when the Pt mass activity (Mass Act) of Comparative Example 1 (Pt/ Pd / C catalyst) is 1.00.

[TABLE 1]

| | Structure of catalyst particle | Surface of catalyst particle Results of XPS analysis | | | | | Whole of catalyst particle Results of ICP analysis | | | | Results of evaluation of properties | Average particle size Results of XRD analysis |
|---|---|---|---|---|---|---|---|---|---|---|---|---|
| | | $R1_{Pt}$ /atm % | $R1_{Pd}$ /atm % | $R1_{Ti}$ /atm % | $R1_{Ti}$ /$R1_{Pt}$ | $R1_{Ti}$/ ($R1_{Pt}$+$R1_{Pd}$+$R1_{Ti}$) | $L_{Pt}$ /wt % | $L_{Pd}$ /wt% | $L_{Ti}$ /wt% | $L_{Pt}$ / ($L_{pt}$+$L_{Pd}$+$L_{Ti}$) | Mass Act @0.9 vs RHE Relative value | Catalyst particle /nm (220) |
| EX.1 | Ti/Pt/Pd/C | 26.25 | 46.87 | 26.88 | 1.02 | 0.27 | 14.90 | 23.00 | 2.09 | 0.05 | 1.03 | 5.0 |
| EX.2 | Ti/Pt/Pd/C | 18.56 | 35.40 | 46.04 | 2.48 | 0.46 | 14.20 | 21.80 | 5.07 | 0.12 | 1.62 | 5.1 |
| Com. EX.1 | Pt/Pd/C | 39.60 | 60.40 | 0.00 | 0.00 | 0.00 | 16.40 | 24.60 | 0.00 | 0.00 | 1.00 | 5.0 |

From the results of the Pt mass activity (Mass Act) shown in TABLE 1, in comparison with the electrode catalyst (Pt / Pd / C catalyst) of Comparative Example 1, it was clear that the electrode catalysts [state where the value of ($R1_{Ti}$ / $R1_{Pt}$) satisfies the condition of the equation (1), and the value of {$R1_{Ti}$ / ($R1_{Pt}$ + $R1_{Pd}$ + $R1_{Ti}$)} satisfies the equation (2)] of Example 1, Example 2 had the same or more of the Pt mass activity.

From the above results, it has been clear that the electrode catalysts of the present working examples had the same or more catalyst activity in comparison with the Pt / Pd / C catalyst. Further, it has been clear that, according to the present invention, since the core-shell structure is included, the amount of platinum to be used can be decreased, which contributes to low cost performance.

Applicability to Industries

The present invention can provide an electrode catalyst which has the same or more catalyst activity and contributes to lowering of the cost in comparison with the Pt / Pd / C catalyst.

Accordingly, the present invention is a type of electrode catalyst that can be used not only in fuel-cell vehicles and electrical equipment industries such as those related to cellular mobiles, but also in Ene farms, cogeneration systems or the like, and thus, shall make contributions to the energy industries and developments related to environmental technologies.

Explanation of symbols

2: Support
3a, 3b: Catalyst particle
4: Core part
5a, 5b, 5c: First shell part
6a, 6b, 6c: Second shell part
10A, 10B: Electrode catalyst
40: Fuel cell stack 40
42: MEA
43: Anode
43a: Gas diffusion layer
43b: Catalyst layer
44: Cathode
45: Electrolyte membrane
46: Separator
48: Separator
50: Rotating disk electrode measuring machine
51: Measuring cell
52: Fixing member
53: Lubbin tube
CE: Counter electrode
CL: Catalyst layer
ES: Electrolyte solution
RE: Reference electrode
WE: Rotating disk electrode

**Claims**

1.  An electrode catalyst comprises:

    an electrically conductive support, and
    catalyst particles supported on the support,

    wherein

    the catalyst particle comprises a core part formed on the support, a first shell part formed on at least a part of the surface of the core part, and a second shell part formed on a part of the surface of the first shell part,
the core part contains Pd,
the first shell contains Pt as a main component,
the second shell contains a Ti oxide as a main component, and
a percentage of the Pt $R1_{Pt}$ (atom %) and a percentage of the Ti derived from the Ti oxide $R_{1Ti}$ (atom %) in an analytical region near a surface measured by X-ray photoelectron spectroscopy (XPS) satisfy the conditions of the following equation (1).

$$1.00 \leq (R1_{Ti} / R1_{Pt}) \leq 2.50 \qquad (1)$$

2. The electrode catalyst according to Claim 1, wherein a percentage $R1_{Pt}$ (atom %) of the Pt, a percentage $R1_{Pd}$ (atom %) of the Pd and a percentage $R1_{Ti}$ (atom %) of the Ti derived from the Ti oxide in an analytical region near a surface measured by X-ray photoelectron spectrum analysis (XPS) satisfy the conditions of the following equation (2).

$$0.20 \leq \{R1_{Ti} / (R1_{Pt} + R1_{Pd} + R1_{Ti})\} \leq 0.50 \qquad (2)$$

3. The electrode catalyst according to Claim 1 or 2, wherein a support rate $L_{Pt}$ (wt %) of the Pt, a support rate $L_{Pd}$ (wt %) of the Pd and a support rate $L_{Ti}$ (wt %) of the Ti derived from the Ti oxide measured by ICP light emission analysis satisfy the conditions of the following equation (3).

$$0.05 \leq \{L_{Ti} / (L_{Pt} + L_{Pd} + L_{Ti})\} \leq 0.15 \qquad (3)$$

4. A composition for forming gas diffusion electrode which comprises the electrode catalyst according to any one of Claims 1 to 3.

5. A gas diffusion electrode which comprises the electrode catalyst according to any one of Claims 1 to 3.

6. A membrane-electrode assembly (MEA) comprising the gas diffusion electrode according to Claim 5.

7. A fuel cell stack comprising the membrane-electrode assembly (MEA) according to Claim 6.

FIG.1

10A Electrode catalyst

6a Second shell part

5a First shell part

5s Exposed surface of first shell part

4 Core part

6s Second shell part

3a Catalyst particle

2 Support

FIG.2

10B Electrode catalyst

6b Second shell part

5s Exposed surface of first shell part

5b First shell part

4s Exposed surface of core part

3b Catalyst particle

5c First shell part

6c Second shell part

4 Core part

2 Support

FIG.3

30 XPS analyzer

36 Analyzer

32 X-ray source

θ=75°
Photoelectron taking out angle

SD Measuring depth
(Escaping depth)

34 Sample stage

FIG.4

FIG.5

FIG.6

Potential of Rotating disk electrode WE (mV vsRHE)

+1000mV

+600mV

3s

3s

1 cycle

Start of potential sweeping (Time／s)

## INTERNATIONAL SEARCH REPORT

| International application No. |
| --- |
| PCT/JP2017/002387 |

| A. CLASSIFICATION OF SUBJECT MATTER |
| --- |
| H01M4/92(2006.01)i, B01J23/44(2006.01)i, H01M8/10(2016.01)n |

According to International Patent Classification (IPC) or to both national classification and IPC

| B. FIELDS SEARCHED |
| --- |
| Minimum documentation searched (classification system followed by classification symbols) |
| H01M4/86-4/98, B01J21/00-38/74, H01M8/00-8/0297, H01M8/08-8/2495 |

Documentation searched other than minimum documentation to the extent that such documents are included in the fields searched

| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2013-080683 A (Nissan Motor Co., Ltd.), 02 May 2013 (02.05.2013), (Family: none) | 1-7 |
| A | JP 2014-209484 A (University of Miyazaki), 06 November 2014 (06.11.2014), (Family: none) | 1-7 |
| A | JP 2013-127869 A (University of Miyazaki), 27 June 2013 (27.06.2013), (Family: none) | 1-7 |
| A | JP 2012-143753 A (Samsung Electronics Co., Ltd.), 02 August 2012 (02.08.2012), & US 2012/0183869 A1 & EP 2477264 A2 | 1-7 |

| [×] Further documents are listed in the continuation of Box C. | | [ ] See patent family annex. |
| --- | --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 March 2017 (31.03.17) | 11 April 2017 (11.04.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/002387

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-072981 A  (Sony Corp.), 14 April 2011 (14.04.2011), & US 2011/0200915 A1     & EP 2351614 A1 | 1-7 |
| A | JP 2015-534244 A  (Audi AG.), 26 November 2015 (26.11.2015), & US 2015/0255798 A1     & WO 2014/065777 A1 | 1-7 |
| A | JP 2011-162879 A  (Robert Bosch GmbH), 25 August 2011 (25.08.2011), & DE 102010001567 A1     & CN 102148068 A | 1-7 |
| A | JP 10-074523 A  (Toshiba Corp.), 17 March 1998 (17.03.1998), (Family: none) | 1-7 |
| A | JP 2014-514956 A  (Toyota Motor Europe N.V./ S.A.), 26 June 2014 (26.06.2014), & US 2014/0193746 A1     & WO 2013/013704 A1 | 1-7 |
| A | WO 2014/069208 A1  (the Doshisha), 08 May 2014 (08.05.2014), & JP 2014-069208 A1 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200731722 B
- JP 2012143753 A
- JP 2008545604 A
- JP 2010501345 A
- JP 2012081391 A
- JP 2015204271 A
- JP 2013127869 A